Europäisches Patentamt

European Patent Office

Office européen des brevets

(11) Publication number: **0 309 581 B1**

# EUROPEAN PATENT SPECIFICATION

(45) Date of publication of patent specification: **09.12.92**   (51) Int. Cl.5: **G02B 7/00**, G12B 3/00

(21) Application number: **88905042.3**

(22) Date of filing: **21.03.88**

(86) International application number:
**PCT/US88/00866**

(87) International publication number:
**WO 88/08145 (20.10.88 88/23)**

(54) **GIMBAL ASSEMBLY.**

(30) Priority: **10.04.87 US 36728**
**10.04.87 US 36729**

(43) Date of publication of application:
**05.04.89 Bulletin 89/14**

(45) Publication of the grant of the patent:
**09.12.92 Bulletin 92/50**

(84) Designated Contracting States:
**BE DE FR GB IT NL**

(56) References cited:
**EP-A- 0 177 815**
**WO-A-84/04991**
**FR-A- 2 044 159**

**Soviets Inventions Illustrated, Week 36, 19th
September 1986, Class P81, 86-237975/36,
Derwent Publications Ltd. (London, GB) &
SU A 1210113**

**Instruments and Experimental Techniques,
vol. 27, no. 5, Part 2, September-October**

**1984 (New York, US) L.S. Vasilenko et al.:
"Device for adjusting a resonator and re-
tuning the frequency of a laser", pp
1267-1268**

**IBM Technical Disclosure Bulletin, vol. 23,
no. 11, April 1981 (New York) F. Grundon et
al.: "Adjustable optics mounting assembly
for vacuum use", pp 4941-4942**

(73) Proprietor: **Hughes Aircraft Company
7200 Hughes Terrace P.O. Box 45066
Los Angeles, California 90045-0066(US)**

(72) Inventor: **ROMERO, Charles
7544 Third Street
Downey, CA 90241(US)**

(74) Representative: **KUHNEN, WACKER & PART-
NER
Alois-Steinecker-Strasse 22 Postfach 1553
W-8050 Freising(DE)**

## Description

The present invention relates to a gimbal assembly for precise positioning of a device on an axis and, in particular, for precisely adjusting the device's position.

Many apparati require the precise positioning of one element with respect to another, and this is particularly true with respect to optical and electro-optical systems. For example, the output from a laser may be directed along a path to a modulator crystal. It is essential in such systems that the axis of the modulator crystal be coincident with the optical axis of the laser. To obtain such coincidence, the modulator crystal axis must be aligned with the laser optical axis. Such alignment usually requires both lateral/translational adjustments and rotational adjustments.

One prior art gimbal assembly for adjusting the resonator and retuning the frequency of a laser is described in "L.S. Vasilenko et at.; "Instruments and Experimental Techniques", 27(1984), No.5, Part 2, pages 1267-1268; New York, USA." Secured to the gimbal assembly is a piezoelectric element for moving the mirror of the resonator. The gimbal assembly is furnished with curved surfaces that mate with each other. The design of the gimbal assembly is based on angular deflection with the aid of surfaces in contact with each other. These surfaces could be spherical, conical, cylindrical, etc. The gimbal assembly consists of a stationary part which is rigidly attached to the flange of the laser. The stationary part mates with a second movable part, on which the piezoelectric element and a laser mirror are mounted. Angular adjustments are made by screws, which also press the movable part of the gimbal assembly against the fixed part. In the described preferred embodiment, a gimbal assembly is described wherein the mating surfaces are spherical, forming a ball joint. The described gimbal assembly has an improved frequency response as compared with other adjustment devices utilizing return springs, cantilevers, etc.

A further prior art approach for the provision of a gimbal assembly to position optical elements with great accuracy is described in the FR-A-2 044 159. The gimbal assembly comprises a cylindrical housing and a hollow mount inside to which an optical element like e.g. a lens, a prism, or a mirror is secured, the mount being disposed within the housing and having a spherical surface which is in frictional engagement with the housing. The mount has an external surface which is partly spherical and consists of a barrel being disposed between two identical bearings, of which the external surfaces constitute the aforementioned external surface of the mount. The optical device is supported by the barrel. The mount consisting of the two bearings and the barrel is held in position in the housing by rings disposed one on each side of the mount. These rings are identical and consist of members of annular cross-section, the end faces of each being contained in two non-parallel planes and that end face of each remote from its respective bearing being perpendicular to the axis of symmetry of the housing. These rings are disposed inside the housing so that the inclined faces come into contact with the outer end faces of the respective bearings. When the entire stack is arranged in the housing by means of locking screws, any desired position of the optical element disposed inside the barrel can be obtained by turning the rings about the axis of symmetry of the housing. The position of the optical element, that is to say of the barrel since the element is fast with the latter, is adjusted by rocking the barrel about two concurrent axes being orthogonal to the symmetry axis. These two rocking movements are obtained by adjusting the angular position of the two rings by turning them about the axis of symmetry of the housing.

Yet another gimbal assembly to position optical elements with respect to the optical axis of a laser system is described in WO-A 86/00 982. The optical elements are positioned within a tubular envelope and consist of a first lens group and a second lens group. The first lens group can move axially while the second lens group is provided with a floating movement for the correction of focusing errors induced in the assembly. To adjust the focal length of the entire lens system, first adjusting means are provided to axially slide the first lens group to the desired positioon. The tubular envelope comprising the first and second lens groups is positioned within an outer housing further comprising the laser system. To position the tubular envelope with respect to the optical axis of the laser system and the outer housing, second adjusting means are provided for pivotally adjusting the tubular envelope with respect to the optical axis of the laser system.

However, in cases where the optical element is e.g a modulator crystal, design criteria make it preferable, and sometimes essential in some environments, that the design of the adjusting and mounting of the modulator with respect to the laser be compact, light, simple, and rugged to withstand disturbances thereon.

This object is solved by a precise positioning apparatus in accordance with claim 1 and a method for precise positioning of a device in accordance with claim 11.

In more detail, the present invention achieves these and other objectives by housing the device to be aligned, e.g., a crystal modulator, on an axis and positioning the axis in translation an pivotal rotation with respect to another axis, e.g., of a laser.

Specifically, in the preferred embodiment, the crystal modulator is supported in an inner housing on an axis which is common to both the inner housing and the modulator. The inner housing is supported within an outer housing whose axis may be coincident with the laser optical axis. Mating surfaces on the inner and outer housings are spherically contoured so that the inner housing may be pivoted about the center of the extended sphere of the mating surfaces and thereby pivot the device axis into coincidence with the optical axis of the laser. An end of the crystal modulator is positioned at this spherical center. If the two axes are offset so that the device end at the center of the sphere does not lie on the axis of the outer housing, the entire inner housing and, therefore, its axis may be translated or laterally moved until the spherical center intersects the axis of the outer housing apparatus.

The preferred mechanization includes two sets of four setscrews threaded into the outer housing at its ends and at 90° to each other. One set of screws is disposed to contact the inner housing directly. The other set of screws is disposed to contact a ring whose inner surface comprises one of the spherical surfaces. By adjustment of the screws, the axis of the inner housing may be linearly moved in a radial direction toward the laser optical axis until at least the laser optical axis and the inner housing axis and, specifically, the crystal modulator's axis intersect at the centerpoint of the spherical surfaces. The set of setscrews distanced from the spherical surfaces have been adjusted to pivot the axis of the inner housing about the centerpoint of the spherical surfaces until the laser and modulator/inner housing axes coincide.

It is a further feature of the present invention that the ring have an elastically deformable section so that it may be sized slightly smaller on its internal peripheral surface with respect to the peripheral surface on the inner housing, to insure secure engagement between the two spherical surfaces.

Several advantages are derived from this arrangement. The design is compact and therefore conserves on space, particularly where the environment on which the adjustment must be made has limited space. As a result, the concepts of the present invention may be incorporated into equipment usuable in airborne and space vehicles. The design further is simple and, therefore, amenable to a reliable, yet cost-effective design. Further, its simplicity helps to insulate it from environmental shock and stress.

Other aims and advantages, as well as a more complete understanding of the present invention, will appear from the following explanation of exemplary embodiments and the accompanying drawings thereof.

## DESCRIPTION OF THE DRAWINGS

FIG. 1 is a side view, partially in cross-section, illustrating one version of the present invention;

FIG. 2 is an end view of the version shown in FIG. 1;

FIG. 3 is a view of a modular layout of the engineered version of the present invention in cross-section;

FIG. 4 is a cross-sectional view of an inner housing of the embodiment of FIG. 3;

FIG. 5 is an end view of the inner housing shown in FIG. 4;

FIG. 6 is a perspective view of an adjusting pivot ring used in the embodiment depicted in FIG. 3; and

FIG. 7 is a cross-sectional view of the ring illustrated in FIG.6 taken along lines 7-7 thereof.

## DETAILED DESCRIPTION OF THE PREFERRED EMBODIMENTS

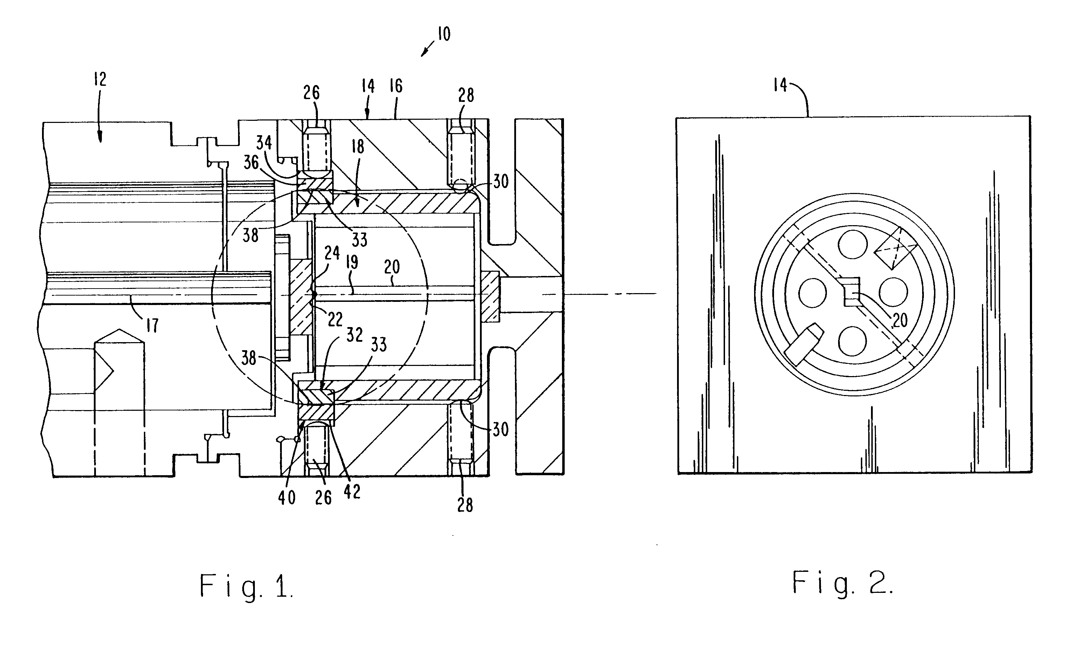

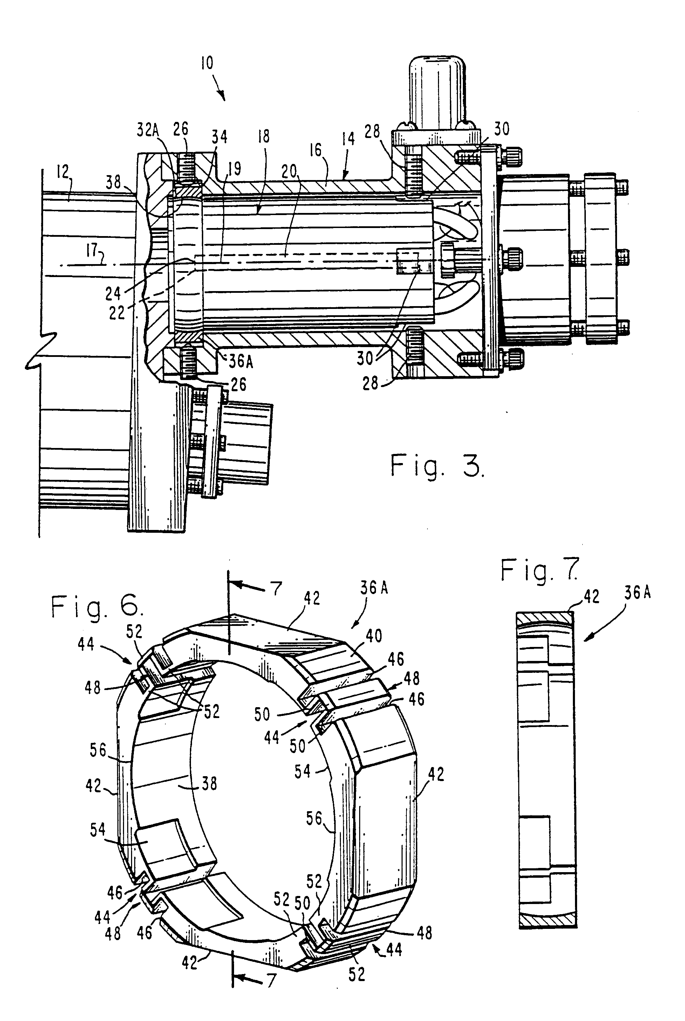

The versions shown in FIGS. 1 and 2 and in FIGS. 3-7 are primarily different in the construction of a bearing 32 and a pivot ring 36. Therefore, both versions will be discussed together with the differences therebetween being pointed out at appropriate times.

Accordingly, referring now to FIGS. 1 and 3 a laser and crystal modulator apparatus 10 comprises a laser 12 having an optical axis 17 and a modulator assembly 14. Modulator assembly 14 includes an outer housing 16 securely coupled to laser 12 and an inner housing 18 having an axis 19. Thus, laser optical axis 17 is fixed with respect to outer housing 16 when the two are secured together, but axis 17 need not be coincident with the axis of the outer housing. A modulator crystal 20 is secured within inner housing 18 in a conventional manner with its end 22 positioned at a center 24 of a spherical arrangement, which will be further described hereinafter. The modulator crystal has an axis which is coincident with inner housing axis 19.

Outer housing 16 is provided with two sets of screws 26 and 28, each set preferably comprising four screws placed 90° from one another which lie in intersecting planes, so that the diametrically opposed screws of both sets 26 and 28 lie in their respective planes. For maximizing the adjustment and positioning capabilities, two sets 26 and 28 are placed at opposite ends and in threaded engagement with outer housing 16.

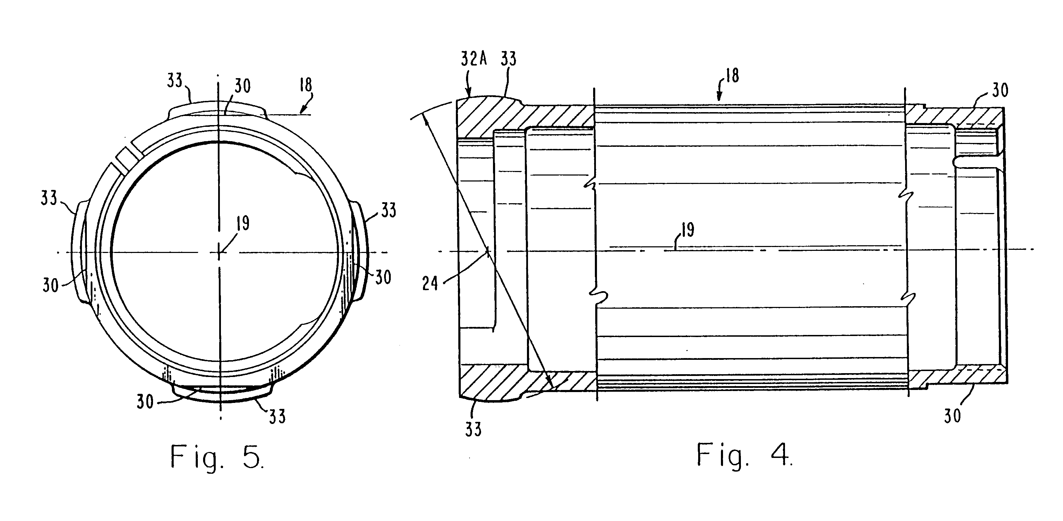

As shown also in FIGS. 4 and 5, inner housing 18 is provided with four planar surfaces 30 (see FIG. 5), which are placed orthogonally with respect to one another and about the periphery of the inner housing. Surfaces 30 extend in planes which are generally parallel to inner housing axis 19. Set of screws 28 are disposed to contact their respective planar surfaces 30 and, when so contacting, prevent rotation of the inner housing about its axis 19.

At the other end of inner housing 18 is bearing 32 for the version of FIGS. 1 and 2 and bearing 32A for the version of FIGS. 3-7. Bearings 32 and 32A are split into four segments 33 whose collective exterior surfaces are generally of annular configuration, having a spherically contoured periphery centered at center 24. The difference between bearings 32 and 32A is that the former is separate and bonded to the inner housing while the latter is formed integral with housing 18.

Outer housing 16 at its end at screw sets 26 has an interior space 34 in which is placed pivot rings 36 and 36A respectively of the two versions, having an internal spherical surface 38 and an outer surface 40. Four orthogonally placed planar surfaces 42 are formed on outer surface 40 and are disposed for contact by the respective screws of set 26. In the annular configuration of pivot ring 36A are four discontinuities 44 defined by pairs of ends 46, which are joined together by an elastically deformable section 48. Section 48 comprises a pair of generally parallel radial segments 50 and three lateral segments 52. The lateral segments are joined generally normal to the radial segments to join termini at one end of the radial segments to one another and the other termini of segments 50 respectively to ends 46 of the ring discontinuities.

In practice, pivot ring 36A is uniformly crimped about its periphery to reduce its diameter such that its internal spherical surface 38 is slightly smaller in dimension than the external peripheral surface of bearing 32, segments 50 being slightly bent in the process of crimping. Section 48, now because of its construction, is elastically deformable and insures intimate contact of internal spherical surface 38 of the pivot ring with the external spherical surfaces of segments 33 of bearing 32A. This yieldable configuration compensates for any slight deviations from tolerance.

Portions of internal spherical surface 38 of pivot ring 36A are also cut away at one side thereof, as denoted by inducium 54. These portions are orthogonally positioned with respect to one another and are configured to meet with orthogonally provided segments 33 of bearing 32. Thus, inner housing 18 may be assembled first within pivot ring 36A by slipping segments 33 within cut-away portions 54 and rotating inner housing 18 through a 45° angle so as to have segments 33 reside within non-cut away portions 56 of pivot ring surface 38. Thereafter, the subassembly of ring 36 and inner housing 18 are slipped into outer housing 16. Then, screwsets 26 and 28 are threaded into respective engagement with planar surfaces 42 and 30. With segments 33 positioned within portions 56, planar surfaces 30 are aligned with respective setscrews 28 which, when in mutual contact, prevents rotation of the inner housing with respect to the pivot ring and outer housing 16.

In the practice of the present invention, to obtain coincidence between axes 17 and 19 of laser 12 and inner housing 18, both sets of screws 26 and 28 are adjusted to laterally translate axis 19 with respect to axis 17 until such point as, at a minimum, the two axes cross at the common center of spherical surface of bearing 32 and pivot ring surface 38. After this minimum intersection of the axes at the spherical centers is completed, screw set 28 is then adjusted to pivot inner housing 18 and its axis 19 about the common spherical center in order to place axes 17 and 19 in coincidence.

Although the invention has been described with respect to particular embodiments thereof, it should be realized that various changes and modifications may be made therein without departing from the spirit and scope of the invention.

## Claims

1. Apparatus (10) for precise positioning of a device (20) comprising:

   a) an inner housing (18) having means for supporting the device (20) on an axis (19) common to said inner housing (18) and the device (20) and a spherically contoured periphery (33) on an external bearing surface of an integral bearing (32A) defining an annular spherical surface being centered at a center (24) of said inner housing (18);

   b) an outer housing (16) for supporting the inner housing (18), and an axis (17) fixed with respect to said outer housing (16);

   c) angularly moving means (26, 28, 30, 36A) coupled between said inner (18) and outer (16) housings for angularly moving said inner housing (18) and said device (20) with respect to said outer housing (16) to bring the common axis (19) in coincidence with the fixed axis (17);

   d) said angularly moving means (26, 28, 30, 36A) comprising first angularly adjusting means (28, 30) axially spaced from said spherically contoured periphery (33) for pivotally adjusting the inner housing (18) and its axis (19) about said center (24) with respect to the fixed axis (17);

   e) second angularly adjusting means (26, 36A) axially spaced from said first angularly adjusting means (28, 30); characterized in that

f) said second angularly adjusting means (26, 36A) extends radially towards said spherically contoured periphery (33) of said inner housing (18) and supports it together with said first angularly adjusting means (28, 30) so that, when both said first (28, 30) and second (26, 36A) angularly adjusting means are operable, they also radially displace said inner housing (18) with respect to said outer housing (16) to enable said axial coincidence.

2. Apparatus according to Claim 1 in which said angularly moving means further comprise:

an annular section (36A) on an interior surface of said outer housing (16) having an internal spherical surface (38) mated with said spherically contoured periphery (33).

3. Apparatus according to Claim 2 in which said first angularly adjusting means (28; 30) comprise:

planar surfaces (30) placed on and about the periphery of said inner housing (18) and respectively extending generally parallel to the common axis (19);

a first set of screws (28) threadedly engaged with said outer housing (16) and extending radially towards said inner housing (18), respectively in contact with said peripheral planar surfaces (30) of said inner housing (18), both to pivot said inner housing (18) and its common axis (19) with respect to said outer housing (16) and the fixed axis (17), and to prevent rotation of said inner housing (18) about its common axis (19) with respect to said outer housing (16).

4. Apparatus according to Claim 3, in which:

said spherically contoured periphery (33) of said inner housing (18) comprises segments (33) spaced from one another about said inner housing exterior surface; and

said annular section (36A) of said outer housing (16) includes portions (54, 56) spaced from one another about said outer housing interior surface (38) in correspondence with said segments (33) to form a bayonet coupling therebetween,

said bayonet coupling permitting axial rotation and interengagement between said inner (18) and outer (16) housings prior to engagement of said first set of screws (28) with said inner housing peripheral planar surfaces (30) and a locked non-rotational interengagement between said inner (18) and outer (16) housings after engagement of said first set of screws (28) with said inner housing peripheral planar surfaces (30).

5. Apparatus according to Claim 2 or 4, in which said annular section (36A) of said outer housing (16) comprises a pivot ring (36A) having a coupling, thereto.

6. Apparatus according to claim 5 wherein said coupling includes

planar surfaces (42) placed on and about the periphery of said pivot ring (36A) and respectively extending generally parallel to the fixed axis (19); and wherein said second angularly adjusting means (26, 36A) comprises a second set of screws (26) threadedly engaged with said outer housing (16) and extending radially towards said pivot ring (36A) and said inner housing (18), respectively in contact with said peripheral planar surfaces (42) of said pivot ring (36A), in part to prevent rotation of said inner housing (18) about its common axis (19) with respect to said outer housing (16).

7. Apparatus according to Claim 5 or 6 further comprising means (56) for maintaining said pivot ring (36A) in yieldable engagement with said spherically contoured periphery (33) on said inner housing exterior surface.

8. Apparatus according to Claim 6 in which said internal spherical surface (38) of said pivot ring (36A) is radially slightly smaller than said spherically contoured periphery (33) of said inner housing (18), said pivot ring (36A) including at least one elastically deformable section (48) for enabling said pivot ring internal spherical surface (38) to yieldably and securely engage said inner housing spherically contoured periphery (33).

9. Apparatus according to Claim 1 in which said device comprises a modulator crystal (20) having an end (22) positioned at said center (24) of said spherical surface, said outer housing (16) is coupled to a laser (12) having an optical axis (17), which defines the fixed axis (17).

10. Apparatus according to Claim 8 or 9 in which:

said pivot ring (36A) includes a peripheral surface (40) radially spaced outwardly from said internal spherical surface (38), and a discontinuity (44) defined by ends (46) coupled together by said elastically deformable section (48); and

said elastically deformable section (48) comprises a pair of generally parallel radial segments (50) spaced from one another, and lateral segments generally normal to said radial segments (50) respectively joining termini of said radial segments (50) respectively to one another and to said ends (46) of the discontinuity (44).

11. A method for precise positioning of a device having an axis comprising the steps of:

disposing the device (20) in an inner housing (18) on an axis (19) common to said inner housing (18) and said device (20);

providing said inner housing (18) with a spherically contoured periphery (33) on an external bearing surface of an integral bearing (32A) defining an annular spherical surface being centered at a center (24) of said inner housing (18);

supporting the inner housing (18) with an outer housing (16) having an axis (17) fixed with respect to said outer housing (16);

angularly moving said inner housing (18) and said device (20) with respect to said outer housing (16) to bring the common axis (19) in coincidence with the fixed axis (17);

providing first angularly adjusting means (28, 30) axially spaced from said spherically contoured periphery (33) for pivotally adjusting the inner housing (18) and its axis (19) about said center (24) with respect to the fixed axis (17);

providing second angularly adjusting means (26, 36A) axially spaced from said first angularly adjusting means (28, 30), characterized by further comprising the steps of

radially extending said second angularly adjusting means (26, 36A) towards said spherically contoured periphery (33) of said inner housing (18); and

supporting said inner housing (18) by said first (28, 30) and second (26,36A) angularly adjusting means such that when they are operated they also radially displace said inner housing (18) with respect to said outer housing (16) to enable said axial coincidence.

12. A method according to Claim 11 further comprising the step of

mating an internal spherical surface (38) of the outer housing (16) with said spherically contoured periphery.

13. A method according to claim 12 further comprising the steps of providing a pivot ring (36A) bearing said periphery (33) and maintaining said pivot ring (36A) in yieldable engagement with this spherically contoured periphery (33).

**Patentansprüche**

1. Vorrichtung (10) zur präzisen Positionierung einer Einrichtung (20), mit
   a) einem inneren Gehäuse (18), welches Vorrichtungen zum Tragen der Einrichtung (20) auf einer Achse (19) aufweist, die für das innere Gehäuse (18) und die Einrichtung (20) gemeinsam ist, sowie eine sphärisch konturierte Peripherie (33) auf einer externen Lageroberfläche eines integralen Lagers (32A), die eine ringförmige sphärische Oberfläche definiert, die mit einem Zentrum (24) des inneren Gehäuses (18) zentriert ist;
   b) einem äußeren Gehäuse (16) zum Tragen des inneren Gehäuses (18), und mit einer Achse (17), die bezüglich des äußeren Gehäuses (16) fixiert ist;
   c) Winkelbewegungsvorrichtungen (26, 28, 30, 36A), die zwischen dem inneren (18) und dem äußeren (16) Gehäuse angekoppelt sind, um das innere Gehäuse (18) und die Einrichtung (20) bezüglich des äußeren Gehäuses (16) winklig zu bewegen, um die gemeinsame Achse (19) mit der festen Achse (17) in Koinzidenz zu bringen;
   d) wobei die Winkelbewegungsvorrichtungen (26, 28, 30, 36A) erste Winkeljustagevorrichtungen (28, 30) aufweisen, die axial entfernt von der sphärisch konturierten Peripherie (33) angeordnet sind, um das innere Gehäuse (18) und seine Achse (19) drehend um das Zentrum (24) bezüglich der festen Achse (17) zu justieren;
   e) zweiten Winkeljustagevorrichtungen (26, 36A), die axial entfernt von den ersten Winkeljustagevorrichtungen (28, 30) angeordnet sind, dadurch gekennzeichnet, daß
   f) die zweiten Winkeljustagevorrichtungen (26, 36A) sich radial in Richtung der sphärisch konturierten Peripherie (33) des inneren Gehäuses (18) erstrecken und es zusammen mit den ersten Winkeljustagevorrichtungen (28, 30) tragen, so daß wenn sowohl die ersten (28, 30) als auch die zweiten (26, 36A) Winkeljustagevorrichtungen betrieben werden, sie das innere Gehäuse (18) bezüglich dem äußeren Gehäuse (16) auch radial verschieben, um die axiale Koinzidenz zu ermöglichen.

2. Vorrichtung nach Anspruch 1, gemäß der die Winkelbewegungsvorrichtungen des weiteren aufweisen:

einen ringförmigen Bereich (36A) auf einer inneren Oberfläche des äußeren Gehäuses (16), welcher eine interne sphärische Oberfläche (38) aufweist, die mit der sphärisch konturierten Peripherie (33) paart.

3. Vorrichtung nach Anspruch 2, in der die ersten Winkeljustagevorrichtungen (28, 30) aufweisen:

ebene Oberflächen (30), welche auf und um die Peripherie des inneren Gehäuses (18) herum angeordnet sind und sich jeweils im wesentlichen parallel zu der gemeinsamen Achse (19) erstrecken;

einen ersten Satz Schrauben (28), die mit dem äußeren Gehäuse (16) im Gewindeeingriff stehen und sich radial in Richtung des inneren Gehäuses (18) erstrecken, und jeweils in Kontakt mit den peripheren ebenen Oberflächen (30) des inneren Gehäuses (18) stehen, um sowohl das innere Gehäuse (18) und seine gemeinsame Achse (19) bezüglich des äußeren Gehäuses (16) und der festen Achse (17) zu drehen, als auch um eine Drehung des inneren Gehäuses (18) um seine gemeinsame Achse (19) bezüglich des äußeren Gehäuses (16) zu verhindern.

4. Vorrichtung nach Anspruch 3, in der

die sphärisch konturierte Peripherie (33) des Gehäuses (18) Segmente (33) umfaßt, die voneinander entfernt und um die externe Oberfläche des inneren Gehäuses herum angeordnet sind; und

der ringförmige Bereich (36A) des äußeren Gehäuses (16) Teile (54, 56) enthält, die voneinander entfernt um die innere Oberfläche (38) des äußeren Gehäuses herum in Übereinstimmung mit den Segmenten (33) angeordnet sind, um zwischen ihnen einen Bajonettverschluß zu bilden; wobei

der Bajonettverschluß eine axiale Drehung und einen Zwischeneingriff zwischen dem inneren (18) und dem äußeren (16) Gehäuse erlaubt, und zwar vor dem Zugriff des ersten Satzes von Schrauben (28) mit den peripheren ebenen Oberflächen (30) des inneren Gehäuses, und einen verriegelten, nicht drehbaren Zwischeneingriff zwischen dem inneren (18) und dem äußeren (16) Gehäuse nach dem Zugriff des ersten Satzes der Schrauben (28) auf die peripheren planaren Oberflächen (30) des inneren Gehäuses.

5. Vorrichtung nach Anspruch 2 oder 4, in der der kreisförmige Bereich (36A) des äußeren Gehäuses (16) aus einem Drehring (36A) besteht, der eine Kopplung mit ihm aufweist.

6. Vorrichtung nach Anspruch 5, in dem Kopplung enthält

ebene Oberflächen (42), welche auf und um die Peripherie des Drehringes (36A) herum angeordnet sind, und die sich jeweils im wesentlichen parallel zu der festen Achse (19) erstrecken, und worin

die zweiten Winkeljustagevorrichtungen (26, 36A) einen zweiten Satz von Schrauben (26) umfassen, die im Gewindeeingriff mit dem äußeren Gehäuse (16) stehen und sich radial in Richtung des Drehringes (36A) und des inneren Gehäuses (18) erstrecken, und die jeweils mit den peripheren ebenen Oberflächen (42) des Drehringes (36A) in Kontakt stehen, teilweise um die Drehung des inneren Gehäuses (18) um seine gemeinsame Achse (19) bezüglich des äußeren Gehäuses (16) zu verhindern.

7. Vorrichtung nach den Ansprüchen 5 oder 6, welche des weiteren Vorrichtungen (56) aufweist, um den Drehring (36A) in einem nachgebenden Eingriff mit der sphärisch konturierten Peripherie (33) auf der äußeren Oberfläche des inneren Gehäuses zu halten.

8. Vorrichtung nach Anspruch 6, in der die interne sphärische Oberfläche (38) des Drehringes (36) radial geringfügig kleiner ist als die sphärisch konturierte Peripherie (33) des inneren Gehäuses (18), wobei der Drehring (36A) wenigstens einen elastisch deformierbaren Bereich (48) enthält, um es der internen sphärischen Oberfläche (38) des Drehringes zu ermöglichen, nachgebend und sicher auf die sphärisch konturierte Peripherie (33) des inneren Gehäuses zuzugreifen.

**9.** Vorrichtung nach Anspruch 1, in der die Einrichtung einen Modulatorkristall (20) umfaßt, der ein Ende (22) aufweist, das bei dem Zentrum (24) der sphärischen Oberfläche angeordnet ist, wobei das äußere Gehäuse (16) mit einem Laser (12) gekoppelt ist, welcher eine optische Achse (17) aufweist, die die feste Achse (17) definiert.

**10.** Vorrichtung nach Anspruch 8 oder 9, in der der Drehring (36A) eine periphere Oberfläche (40) enthält, welche radial außerhalb der internen sphärischen Oberfläche (38) angeordnet ist, sowie eine Diskontinuität (44), die durch Enden (46) definiert ist, die mittels dem elastisch deformierbaren Bereich (48) zusammengekoppelt sind; und

wobei der elastisch deformierbare Bereich (48) ein Paar von im wesentlichen parallelen radialen Segmenten (50) umfaßt, welche voneinander entfernt angeordnet sind sowie laterale Segmente, die sich im wesentlichen senkrecht zu den radialen Segmenten (50) befinden, und die jeweils Enden der radialen Segmente (50) miteinander und mit den Enden (46) der Diskontinuität (44) verbinden.

**11.** Ein Verfahren zur präzisen Positionierung einer Einrichtung, die eine Achse aufweist, welches die Schritte aufweist:

Anordnen der Einrichtung (20) in einem inneren Gehäuse (18) auf eine Achse (19), die für das innere Gehäuse (18) und die Einrichtung (20) gemeinsam ist;

Bereitstellen des inneren Gehäuses (18) mit einer sphärisch konturierten Peripherie (33) auf einer externen lagernden Oberfläche eines integralen Lagers (32A), das eine ringförmige sphärische Oberfläche definiert, die um ein Zentrum (24) des inneren Gehäuses (18) zentriert ist;

Tragen des inneren Gehäuses (18) mittels eines äußeren Gehäuses (16), welches eine Achse (17) aufweist, die bezüglich des äußeren Gehäuses (16) fixiert ist;

winkliges Bewegen des inneren Gehäuses (18) und der Einrichtung (20) bezüglich des äußeren Gehäuses (16), um die gemeinsame Achse (19) mit der fixierten Achse (17) in Koinzidenz zu bringen;

Bereitstellen von ersten Winkeljustagevorrichtungen (28, 30), welche axial von der sphärisch konturierten Peripherie (33) entfernt angeordnet sind, um das innere Gehäuse (18) und seine Achse (19) um das Zentrum (24) bezüglich der fixierten Achse (17) drehend zu justieren;

Bereitstellen von zweiten Winkeljustagevorrichtungen (26, 36A), welche axial von den ersten Winkeljustagevorrichtungen (28, 30) entfernt angeordnet sind, dadurch gekennzeichnet, daß es des weiteren die Schritte aufweist:

radiales sich Ausdehnenlassen der zweiten Winkeljustagevorrichtungen (26, 36A) in Richtung der sphärisch konturierten Peripherie (33) des inneren Gehäuses (18); und

Tragen des inneren Gehäuses (18) mittels den ersten (28, 30) und zweiten (26, 36A) Winkeljustagevorrichtungen derart, daß wenn sie betrieben werden, sie das innere Gehäuse (18) gleichermaßen radial bezüglich des äußeren Gehäuses (26) verschieben, um die Achsenkoinzidenz zu ermöglichen.

**12.** Verfahren nach Anspruch 11, welches des weiteren den Schritt aufweist:

paariges Ausbilden einer internen sphärischen Oberfläche (38) des äußeren Gehäuses (16) mit der sphärisch konturierten Peripherie.

**13.** Ein Verfahren nach Anspruch 12, welches des weiteren die Schritte des Bereitstellen eines Drehringes (36A) aufweist, der die Peripherie (33) lagert und Aufrechterhalten des Drehringes (36A) in einem nachgebenden Zugriff auf diese sphärisch konturierte Peripherie (33).

**Revendications**

**1.** Appareil (10) pour positionner avec précision un dispositif (20), comportant :

a) un corps intérieur (18) ayant des moyens destinés à supporter le dispositif (20) sur un axe (19) commun audit corps intérieur (18) et au dispositif (20) et une périphérie (33) à contour sphérique sur une surface extérieure d'appui d'un appui monobloc (32A) définissant une surface annulaire sphérique, étant centrée sur un centre (24) dudit corps intérieur (18) ;

b) un corps extérieur (16) destiné à supporter le corps intérieur (18), et un axe (17) qui est fixe par rapport audit corps extérieur (16) ;

c) des moyens (26, 28, 30, 36A) à mouvement angulaire couplés entre lesdits corps intérieur (18) et extérieur (16) pour déplacer angulairement ledit corps intérieur (18) et ledit dispositif (20) par rapport audit corps extérieur (16) afin d'amener l'axe commun (19) en coincidence avec l'axe fixe (17) ;

d) lesdits moyens (26, 28, 30, 36A) à mouvement angulaire comprenant un premier moyen (28, 30) de réglage angulaire, espacé axialement de ladite périphérie (33) à contour sphérique pour régler de façon pivotante le corps intérieur (18) et son axe (19) autour dudit centre (24) par rapoprt à l'axe fixe (17) ;

e) des seconds moyens (26, 36A) de réglage angulaire espacés axialement desdits premiers moyens (28, 30) de réglage angulaire ; caractérisé en ce que

f) lesdits seconds moyens (26, 36A) de réglage angulaire s'étendent radialement vers ladite périphérie (33) à contour sphérique dudit corps intérieur (18) et la supportent en même temps que lesdits premiers moyens (28, 30) de réglage angulaire de manière que, lorsque lesdits premiers (28, 30) et seconds (26, 36A) moyens de réglage angulaire peuvent être tous manoeuvrés, ils déplacent aussi radialement ledit corps intérieur (18) par rapport audit corps extérieur (16) pour permettre ladite coïncidence axiale.

2. Appareil selon la revendication 1, dans lequel lesdits moyens à mouvement angulaire comprennent en outre :

une section annulaire (36A) sur une surface intérieure dudit corps extérieur (16) ayant une surface intérieure sphérique (38) accouplée avec ladite périphérie (33) à contour sphérique.

3. Appareil selon la revendication 2, dans lequel lesdits premiers moyens (28 ; 30) de réglage angulaire comprenennt :

des surfaces planes (30) placées sur, et autour de, la périphérie dudit corps intérieur (18) et s'étendant, respectivement, à peu près parallèlement à l'axe commun (19) ;

un premier jeu de vis (28) engagées par vissage avec ledit corps extérieur (16) et s'étendant radialement vers ledit corps intérieur (18), respectivement, en contact avec lesdites surfaces périphériques planes (30) dudit corps intérieur (18), à la fois pour faire pivoter ledit corps intérieur (18) et son axe commun (19) par rapport audit corps extérieur (16) et à l'axe fixe (17), et pour empêcher une rotation dudit corps intérieur (18) autour de son axe commun (19) par rapport audit corps extérieur (16).

4. Appareil selon la revendication 3, dans lequel :

ladite périphérie (33) à contour sphérique dudit corps intérieur (18) comprend des segments (33) espacés les uns des autres le long de ladite surface extérieure du corps intérieur ; et

ladite section annulaire (36A) dudit corps extérieur (16) comprend des parties (54, 56) espacées les unes des autres le long de ladite surface intérieure (38) du corps extérieur en correspondance avec lesdits segments (33) pour former entre eux un accouplement à baïonnette,

ledit accouplement à baïonnette permettant une rotation axiale et un enclenchement mutuel entre lesdits corps intérieur (18) et extérieur (16) avant l'engagement dudit premier jeu de vis (28) avec lesdites surfaces périphériques planes (30) du corps intérieur et un enclenchement mutuel verrouillé, non tournant, entre lesdits corps intérieur (18) et extérieur (16) après l'engagement dudit premier jeu de vis (28) avec lesdites surfaces périphériques planes (30) dudit corps intérieur.

5. Appareil selon la revendication 2 ou 4, dans lequel ladite section annulaire (36A) dudit corps extérieur (16) comprend un anneau de pivot (36A) ayant un accouplement attenant.

6. Appareil selon la revendication 5, dans lequel ledit accouplement comprend

des surfaces planes (42) placées sur, et le long de, la périphérie dudit anneau de pivot (36A) et s'étendant, respectivement, à peu près parallèlement à l'axe fixe (19) ; et dans lequel

lesdits seconds moyens (26, 36A) de réglage angulaire comprennent un second jeu de vis (26) engagées par vissage avec ledit corps extérieur (16) et s'étendant radialement vers ledit anneau (36A) de pivot et ledit corps intérieur (18), respectivement, en contact avec lesdites surfaces planes périphériques (42) dudit anneau (36A) de pivot, en partie pour empêcher une rotation dudit corps intérieur (18) autour de son axe commun (19) par rapport audit corps extérieur (16).

7. Appareil selon la revendication 5 ou 6, comportant en outre des moyens (56) destinés à maintenir ledit anneau (36A) de pivot en engagement flexible avec ladite périphérie (33) à contour sphérique sur ladite surface extérieure du corps intérieur.

8. Appareil selon la revendication 6, dans lequel ladite surface sphérique intérieure (38) dudit anneau (36A) de pivot est radialement légèrement plus petite que ladite périphérie (33) à contour sphérique dudit corps intérieur (18), ledit anneau (36A) de pivot comprenant au moins une section (48) élastiquement déformable pour permettre à ladite surface intérieure sphérique (38) dudit anneau de pivot d'engager de façon flexible et sûre ladite périphérie (33) à contour sphérique dudit corps intérieur.

9. Appareil selon la revendication 1, dans lequel ledit dispositif comporte un cristal modulateur (20) ayant une extrémité (22) positionnée audit centre (24) de ladite surface sphérique, ledit corps extérieur (16) est couplé à un laser (12) ayant un axe optique (17) qui définit l'axe fixe (17).

10. Appareil selon la revendication 8 ou 9, dans lequel :

   ledit anneau (36A) de pivot présente une surface périphérique (40) espacée radialement vers l'extérieur de ladite surface intérieure sphérique (38), et une discontinuité (44) définie par des extrémités (46) accouplées entre elles par ladite section élastiquement déformable (48) ; et

   ladite section élastiquement déformable (48) comprend deux segments radiaux globalement parallèles (50) espacés l'un de l'autre, et des segments latéraux globalement normaux auxdits segments radiaux (50) reliant, respectivement, des bouts desdits segments radiaux (50), respectivement, entre eux et auxdites extrémités (46) de la discontinuité (44).

11. Procédé pour le positionnement précis d'un dispositif ayant un axe, comprenant les étapes qui consistent :

   à disposer le dispositif (20) dans un corps intérieur (18) sur un axe (19) commun audit corps intérieur (18) et audit dispositif (20) ;

   à pourvoir ledit corps intérieur (18) d'une périphérie (33) à contour sphérique sur une surface extérieure d'appui d'un appui monobloc (32A) définissant une surface annulaire sphérique centrée en un centre (24) dudit corps intérieur (18) ;

   à supporter le corps intérieur (18) avec un corps extérieur (16) ayant un axe (17) qui est fixe par rapport audit corps extérieur (16) ;

   à déplacer angulairement ledit corps intérieur (18) et ledit dispositif (20) par rapport au corps extérieur (16) afin d'amener l'axe commun (19) en coïncidence avec l'axe fixe (17) ;

   à prévoir des premiers moyens (28, 30) de réglage angulaire espacés axialement de ladite périphérie (33) à contour sphérique pour régler de façon pivotante le corps intérieur (18) et son axe (19) autour dudit centre (24) par rapport audit axe fixe (17) ;

   à prévoir des seconds moyens (26, 36A) de réglage angulaire espacés axialement desdits premiers moyens (28, 30) de réglage angulaire, caractérisé en ce qu'il comprend en outre les étapes qui consistent

   à étendre radialement lesdits seconds moyens (26, 36A) de réglage angulaire vers ladite périphérie (33) à contour sphérique dudit corps intérieur (18) ; et

   à supporter ledit corps intérieur (18) à l'aide desdits premiers (28, 30) et seconds (26, 36A) moyens de réglage angulaire de manière que, lorsqu'ils sont mis en oeuvre, ils déplacent aussi radialement ledit corps intérieur (18) par rapport audit corps extérieur (16) pour permettre ladite coïncidence axiale.

12. Procédé selon la revendication 11, comprenant en outre l'étape qui consiste

   à accoupler une surface intérieure sphérique (38) du corps extérieur (16) avec ladite périphérie à contour sphérique.

13. Procédé selon la revendication 12, comprenant en outre les étapes qui consistent à prévoir un anneau (36A) de pivot portant ladite périphérie (33) et à maintenir ledit anneau (36A) de pivot en engagement flexible avec cette périphérie (33) à contour sphérique.

Fig. 2.

Fig. 1.

Fig. 3.

Fig. 6.

Fig. 7

Fig. 5.

Fig. 4.

EP 0 309 581 B1